Europäisches Patentamt

European Patent Office

Office européen des brevets

(11) Publication number: **0 258 945 B1**

# EUROPEAN PATENT SPECIFICATION

(45) Date of publication of patent specification: **04.11.92**   (51) Int. Cl.5: **G06F 1/00**

(21) Application number: **87201641.5**

(22) Date of filing: **31.08.87**

(54) **System for providing a telecommunication connection with a computer.**

(30) Priority: **05.09.86 NL 8602245**

(43) Date of publication of application:
**09.03.88 Bulletin 88/10**

(45) Publication of the grant of the patent:
**04.11.92 Bulletin 92/45**

(84) Designated Contracting States:
**DE FR GB IT NL SE**

(56) References cited:
**US-A- 4 096 356**
**US-A- 4 531 023**

**ELECTRONICS INTERNATIONAL, vol. 57, no. 5, 8th March 1984, pages 131-135, New York, US; J. SMITH: "Call-back schemes ward off unwanted access by telephone"**

**NATIONAL TELECOMMUNICATIONS CONFERENCE, New Orleans, Louisiana, 29th November - 3rd December 1981, vol. 3, pages F3.1.1-F3.1.5, IEEE; J. EDWARDS et al.: "The ROLM CBX as an integrated voice/data communications switching system"**

**CONFERENCE ON COMMUNICATIONS EQUIPMENT AND SYSTEMS, Birmingham,**

**20th-22nd April 1982, pages 8-13; G.P. OLIVER: "The integrated services digital network"**

**IBM TECHNICAL DISCLOSURE BULLETIN, vol. 22, no. 9, February 1980, pages 4196-4197, Armonk, N.Y., US; J.T. POWERS, Jr.: "Switched lines access restrictor"**

(73) Proprietor: **N.V. Philips' Gloeilampenfabrieken
Groenewoudseweg 1
NL-5621 BA Eindhoven(NL)**

(72) Inventor: **Krikke, Germen Klaas
c/o INT. OCTROOIBUREAU B.V. Prof. Holstlaan 6
NL-5656 AA Eindhoven(NL)**
Inventor: **Teule, Hendrik
c/o INT. OCTROOIBUREAU B.V. Prof. Holstlaan 6
NL-5656 AA Eindhoven(NL)**

(74) Representative: **De Jongh, Cornelis
Dominicus et al
INTERNATIONAAL OCTROOIBUREAU B.V.
Prof. Holstlaan 6
NL-5656 AA Eindhoven(NL)**

EP 0 258 945 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**EP 0 258 945 B1**

**Description**

The invention relates to a method for providing a telecommunication connection with a computer, the connection comprising a telecommunication exchange, terminals to be connected with this exchange and a security unit for safeguarding the terminal-access to the computer connected to the system, the method comprising:

* receiving from a requesting terminal an identification code indicating the number of a terminal to be connected with the computer,
* storing the numbers of the terminals authorized to establish a connection with the computer,
* matching the number indicated by the identification code against the stored numbers,
* making a ringing signal go out, in the case of a match, to the terminal to be connected with the computer,
* establishing a telecommunication connection between the latter terminal and the computer in response to an answer signal received from this terminal.

Such a method is known from the Article by J. Smith entitled "Call-back schemes ward off unwanted access by telephone", Electronics International, Vol. 57, No. 5, 8th March 1984,pages 131-135.

It is possible for a data terminal to be connected to a computer, even though the distance between the computer and the terminal may be large. This connection can then be achieved via a telecommunication network (public or private), and a plurality of terminals can be connected to the computer via a telecommunication exchange comprised in this telecommunication network.

A problem which may arise here is that unauthorized users may try to gain access to the computer. A security system is known under the name of "call-back system". When implementing this system a person who wants to start using the computer dials a telephone number to an access port of the computer. Subsequently, this person provides the access port with an identification code, to be compared to the identification codes stored in its memory. If it appears that the provided identification code matches a stored identification code, the computer will select a telecommunication number (for example a telephone number) which is linked inside the computer memory with the stored identification code. This will generally be the telephone number of the person who wants to start using the computer, thus of the requesting terminal.

From the aforesaid publication it is known to insert between the exchange and the computer a separate security unit for performing the access port function by means of the call-back scheme. When implementing this scheme the user dials the telephone number of the subscriber line connected to the security unit, upon which a normal telephone connection between the user and the security unit is established. Then the identification code is transferred via the thus formed communication channel.

The known system has two disadvantages. A first disadvantage is that signalling information available in the exchange is not readily available in the communication connection; consequently, this signalling information cannot be used to advantage with the access control to the computer. A second disadvantage is that the known system requires a separate arrangement, whose complexity, this is the price, increases with a rising number of users and computer ports.

The invention has for its object to provide a method of the type mentioned in the preamble wherein besides the usual equipment in such as terminals, exchange and computer no additional equipment is required and wherein for the benefit of access control the signalling information available in the exchange is used to full advantage.

To this end the method in accordance with the invention is characterized in that:

* the security unit is comprised in the exchange and that further means provided in the exchange prevent the establishment, without the security unit being involved, of a connection between a terminal and a telecommunication line connected to the exchange and giving access to the computer, the prevention method comprising:
* during the request phase the preventing means reserves the line circuit of a subscriber line connected to the computer and this line circuit is maintained in the reserved state when disconnecting the call and releasing all other resources at the end of the request phase,
* during the call-back phase the preventing means attempts to set up a connection between the authorised terminal and the already engaged line circuit followed by the preventing means checking whether the authorized terminal answers the call.

The invention also provides a system in which the above method operates, wherein the security unit in the system comprises:

* a receive memory for the receiving the identification code,
* an authorization memory for storing the numbers,
* comparator means for matching the numbers,

2

* dialling means for making the ringing signal go out,
* and connecting means for establishing the connection.

As the security unit forms part of the exchange, safeguarding the access to the computer with a modern electronic telecommunication exchange can be designed as a software system. Thereto the processor and memory capacity already available in the exchange can be used to advantage, being far less expensive than separate security equipment. The aforesaid preventing means prevent unauthorized callers who happen to have the subscriber number of one of the subscriber lines to the computer, from dodging the access-control by dialling the number directly.

A further advantage of the method in accordance with the invention is gained as the signalling information already available in the exchange is used therein. The terminals connected to the exchange can comprise both pulse dialling and tone dialling equipment. In either case the access to the desired computer port can be achieved by means of a code to be entered by the user. This is in contrast with the known system, wherein the security unit can merely receive tone dialling signals.

Modern electronic exchanges can offer the associated users rerouting facilities known as "follow-me", "call-forwarding" or "chief-secretary facilities". The user of a terminal (the original destination terminal) can then make known to the exchange that the calls meant for him should be transferred to another terminal (the divert terminal). In the telecommunication system the exchange comprises rerouting means for rerouting a call intended for an original destination terminal connected to the exchange, to a divert terminal connected to the exchange.

To avoid calls processed by the exchange thus being transferred to a non-authorized terminal, such a method in accordance with the invention is characterized in that in the exchange the connection between the computer and the original destination terminal is switched through under the control of the security unit irrespective of the requested rerouting.

With these measures and by combining signalling information indicating rerouting with the security information, it is avoided that a non-authorized terminal gains access to the computer via the "call-back" method. This facility would not be possible with a separate security unit manifesting as an ordinary subscriber unit with respect to the exchange.

An advantageous embodiment of the method is characterized in that the identification code forms part of the telephone number to be dialled by the user of the requesting terminal for requesting the connection with the computer.

The aforesaid measures simplify requesting a connection to the computer. If such a facility with a separate security unit were to be inserted between the exchange and the computer, as many subscriber lines would be required between the exchange and the security unit as there have been issued identification codes.

Besides disregarding the aforedescribed rerouting and inserting the identification code in the computer request number, the use of the information available in the exchange still offers further possibilities. A first possibility is identification of the terminal by means of which an unauthorized person tries to gain access to the computer. This is particularly important to private exchanges if the terminal is connected to that exchange. A second possibility is using the so-called "repeated call-back" facility, enabling repeated calling back of the authorized terminal if it appears to be busy at a first calling-back.

The invention and its advantages are further explained with reference to the Figures in which:

Figure 1 shows a flow-chart representing the request part of the "call-back" procedure;

Figure 2 shows a flow-chart representing the calling-back by the exchange to the authorized terminal.

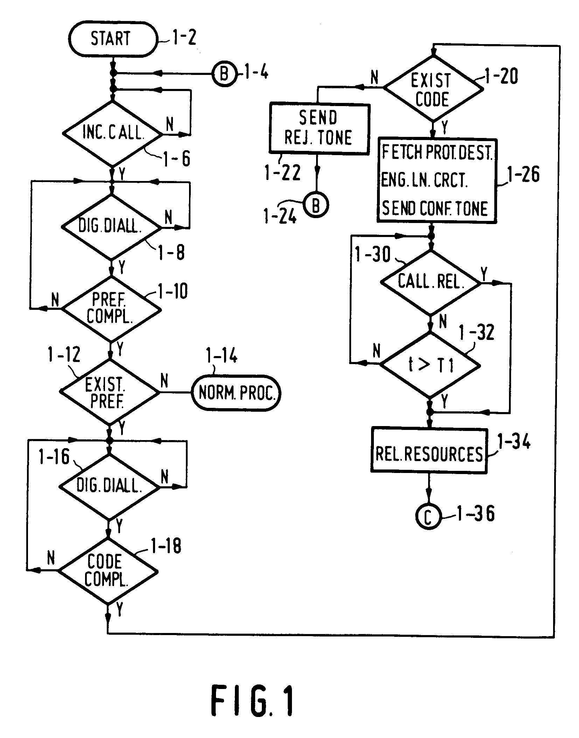

The blocks in Figure 1 have the following meanings:

| Block number | Title | Meaning |
| --- | --- | --- |
| 1-2 | START | begin of the call-back procedure |
| 1-4 | B | junction point with all further blocks marked "B" |
| 1-6 | INC.CALL | check whether a call is made over an exchange subscriber line or over a line connecting the exchange to another exchange; |
| 1-8 | DIG.DIALL | check whether the caller dials a digit; |
| 1-10 | PREF.COMPL. | check whether the first part of the number to be dialled (the prefix) is complete; |
| 1-12 | EXIST.PREF. | check whether the digit combination forming the prefix is a prefix indicating that the caller wishes to gain access to the computer; |
| 1-14 | NORM.PROC. | the exchange follows the normal procedure for calls which are not intended for the computer; |
| 1-16 | DIG.DIALL. | check whether the caller dials a further digit; |
| 1-18 | CODE COMPL. | check whether the second part of the number to be dialled (the identification code) is complete; |
| 1-20 | EXIST.CODE | check whether the received code is a code existing in the authorization memory; |
| 1-22 | SEND REJ.TONE | send a reject tone to the caller; |
| 1-24 | B | junction point with all other blocks marked "B"; |
| 1-26 | FETCH PROT.DEST. ENG.LN.CRCT SEND CONF.TONE | the telephone number of the authorized terminal going with the identification code is being searched; the line circuit of a subscriber line connected to the computer is |

|       |              | engaged and a confirm tone is emitted to the caller; |
|-------|--------------|-------------------------------------------------------|
| 1-30  | CALL.REL.    | check whether the caller has released the connection; |
| 1-32  | t > T1       | check whether a time T1 has passed after the start of a confirm tone; |
| 1-34  | REL.RESOURCES| all units used for handling the request for a computer connection are released, the engaged line circuit remains engaged; |
| 1-36  | C            | junction point with all further blocks marked "C" |

The request part of the "call-back" procedure starts with a check as to whether there is an incoming call (block 1-6). It is assumed that the number sent by the user to the exchange consists of two parts: a prefix indicating that the user wishes to gain access to the computer and an identification code in combination with the prefix amongst others indicating with which authorized terminal the connection is desired.

After the relevant set of digits is received it is checked whether it is a prefix for computer access (blocks 1-8, 1-10, 1-12). If this is not the case the normal, standard procedure is changed to that for handling a call by a telephone exchange (1-14). If it is indeed a prefix for computer access then the subsequent identification code (1-16, 1-18, 1-20) is checked.

If the received identification code does not match one of the stored identification codes, the request is not processed any further by the exchange; this can be made known to the sender by means of a reject signal (1-22). If the identification code is valid the sender will receive a confirm signal, the telephone number of the authorized terminal will likewise be fetched and the line circuit of the desired computer port will be reserved for connection to the terminal (1-26).

After the connection to the sender is released, either by the sender himself (1-30) or by a clock interval in the exchange (1-32), all units associated with the exchange (hardware and software) which were used in the aforesaid procedure are released again. Only the already engaged line circuit remains in this state.

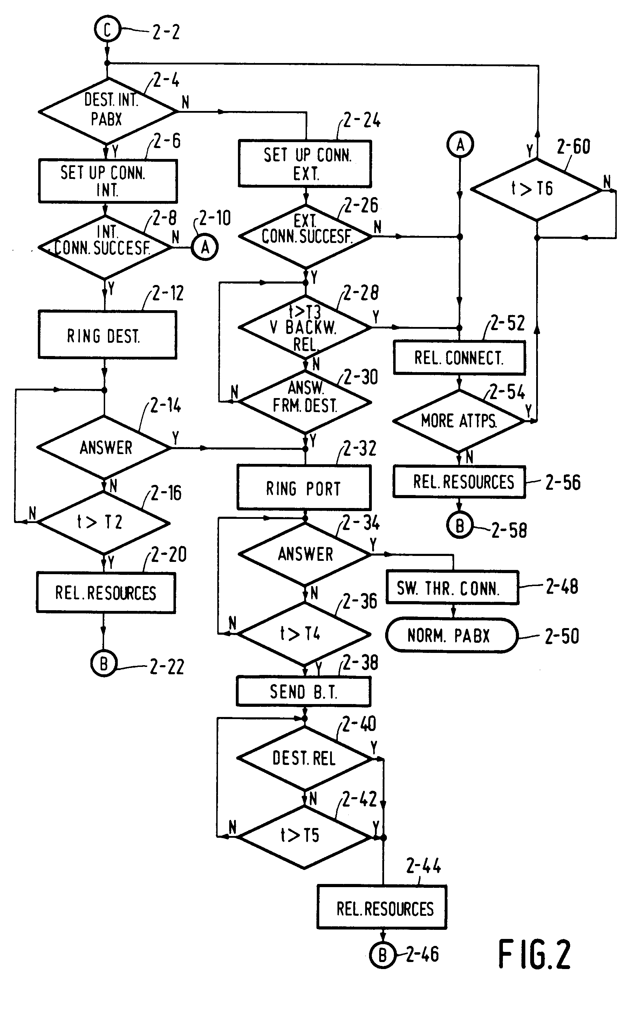

In Figure 2 is shown a flow-chart representing this procedure. The blocks in this Figure have the following meanings:

| Block number | Title | Meaning |
|---|---|---|
| 2-2 | C | junction point with all further blocks marked "C"; |
| 2-4 | DEST.INT. PABX | check whether the authorized terminal is connected direct to the exchange; |
| 2-6 | SET UP CONN.INT. | attempt to set up an internal connection between the authorized terminal and the already engaged line circuit, disregarging any call-rerouting for that terminal; |
| 2-8 | INT.CONN. SUCCESF. | check whether the internal connection is set up successfully; |
| 2-10 | A | junction point with all further blocks marked "A"; |
| 2-12 | RING DEST. | send a ringing signal to the authorized terminal; |
| 2-14 | ANSWER | check whether the authorized terminal answers the call; |
| 2-16 | t > T2 | check whether a time T2 has passed after the start of the ringing signal to the authorized terminal; |
| 2-20 | REL.RESOURCES | all units that were used for calling the internal authorized terminal are released; |
| 2-22 | B | junction point with all further blocks marked "B"; |
| 2-24 | SET UP CONN.EXT | attempt to set up a connection between the (external) authorized terminal and the already engaged line circuit; |
| 2-26 | EXT.CONN. SUCCESF. | check whether the external connection has been set up successfully; |
| 2-28 | t > T3 V BACKW.REL | check whether a time T3 has passed after the external connection has |

6

|        |             |                                                                                                                          |
|--------|-------------|--------------------------------------------------------------------------------------------------------------------------|
|        |             | been set up successfully or whether the connection was released during calling;                                          |
| 2-30   | ANSW.FRM. DEST. | check whether the destination terminal answers the call;                                                             |
| 2-32   | RING PORT   | the computer port is called by means of a ringing signal;                                                                |
| 2-34   | ANSWER      | check whether the computer port answers the call;                                                                        |
| 2-36   | t > T4      | check whether a time T4 has passed after the start of the ringing signal to the computer port;                           |
| 2-38   | SEND B.T.   | a busy tone is sent to the authorized terminal;                                                                          |
| 2-40   | DEST.REL.   | check whether the destination terminal has released the connection;                                                     |
| 2-42   | t > T5      | check whether a time T5 has passed after the start of the busy tone to the destination terminal;                        |
| 2-44   | REL.RESOURCES | all units that were used for setting up a connection between the computer port and the external terminal are released;  |
| 2-46   | B           | junction point with all further blocks marked "B";                                                                       |
| 2-48   | SW.THR.CONN. | a communication channel is established between the computer port and the external terminal;                            |
| 2-50   | NORM.PABX.  | the exchange starts following the normal procedure for further handling an existing communication channel;               |
| 2-52   | REL.CONNECT. | all exchange units that were used to set up the connection are released, except for the already engaged line circuit;   |

| 2-54 | MORE ATTPS. | check whether a new attempt should be made to set up a connection; |
| 2-56 | REL.RESOURCES. | all exchange units that were used to set up the connection are released; |
| 2-58 | B | junction point with all further blocks marked "B"; |
| 2-60 | T > T6 | check whether a time larger than T6 has passed since the units that were used to set up the connection were released; |

The call-back part of a "call-back" procedure is started by determining whether the authorized terminal belongs to the exchange network or has to be reached through another exchange (private or public) (2-4).

If the terminal belongs to the same network (in other words V is the terminal connected direct to the exchange) attempts will be made to set up a connection between the terminal and the reserved line circuit (2-6,2-8), upon which a ringing signal will be sent to the terminal (2-12) if the attempt is successful. If the terminal does not answer this call within a predetermined time T2, the exchange will go back to its initial position while releasing the used equipment and programming units (2-14, 2-16, 2-20, 2-22).

If the terminal answers the call within the predetermined time T2, the requested computer port will be called by means of a ringing signal (2-32). If this call is answered a communication channel will be established between the authorized terminal and the computer upon which the exchange will start following the usual procedure for further handling this connection (2-34, 2-48, 2-50). If the computer port does not answer the ringing signal within a predetermined time T4 (for example because the computer is congested) an engaged-signal will be sent to the terminal (2-36, 2-38). The connection can now be released by the terminal (2-40) or by the exchange after a predetermined time T5 (2-42), after which all equipment and programming units associated with the exchange are released (2-44). Subsequently, the exchange will go back to its initial position (2-46).

If the terminal is not connected direct to the exchange it will be tried to set up an external connection with this terminal (2-24). If this attempt is successful and if the terminal replies within the predetermined time T3 before the connection is released (2-28, 2-30), a ringing signal will be sent to the computer port (2-32) after which the process has the same course as described in the case of a terminal associated with the exchange.

If an attempt to set up an external connection with the terminal is unsuccessful and if the terminal does not respond within the predetermined time T3 (2-26, 2-28), or if an attempt to set up an internal connection with the terminal is unsuccessful, all units involved in the setting up of the connection will be released except for the already engaged line circuit (2-52). If no further ring back attempts are wished, all units including the line circuit will be released (2-56) after which the exchange will go back to its initial position (2-58). If further ring back attempts are wished indeed the exchange will return to the start of the ring back procedure, after a time T has passed in which possible traffic congestion can be removed which could have been the cause of the failing external connection set up.

**Claims**

1. A method for providing a telecommunication connection with a computer, the connection comprising a telecommunication exchange, terminals to be connected with this exchange and a security unit for safeguarding the terminal-access to the computer connected to the system, the method comprising:
    * receiving from a requesting terminal an identification code indicating the number of a terminal to be connected with the computer (1-12),
    * storing the numbers of the terminals authorized to establish a connection with the computer (1-20),
    * matching the number indicated by the identification code against the stored numbers,
    * making a ringing signal go out, in the case of a match, to the terminal to be connected with the computer(2-12),

* establishing a telecommunication connection between the latter terminal and the computer in response to an answer signal received from this terminal(2-48),
  characterized in that:

* the security unit is comprised in the exchange and that further means provided in the exchange prevent the establishment, without the security unit being involved, of a connection between a terminal and a telecommunication line connected to the exchange and giving access to the computer, the prevention method comprising:

* during the request phase the preventing means reserves the line circuit of a subscriber line connected to the computer ( 1-26) and this line circuit is maintained in the reserved state when disconnecting the call and releasing all other resources at the end of the request phase(1-34), and

* during the call-back phase the preventing means attempts to set up a connection between the authorised terminal and the already engaged line circuit (2-6, 2-24) followed by the preventing means checking whether the authorized terminal answers the call (2-14, 2-30).

2. A method as claimed in Claim 1 wherein in the exchange a call intended for an original destination terminal connected to the exchange is rerouted to a divert - terminal connected to the exchange, characterized in that in the exchange the connection between the computer and the original destination terminal is switched through under the control of the security unit irrespective of the requested rerouting.

3. A method as claimed in Claim 1 or 2, characterized in that the identification code forms part of the telephone number to be dialled by the user of the requesting terminal for requesting the connection with the computer.

4. A system for providing a telecommunication connection with a computer, the connection comprising a telecommunication exchange, terminals to be connected with this exchange and a security unit for safeguarding the terminal-access to the computer connected to the system, the security unit comprising:

* a receive memory for receiving from a requesting terminal an identification code indicating the number of a terminal to be connected with the computer (1-12),

* an authorization memory for storing the numbers of the terminals authorized to establish a connection with the computer(1-20),

* comparator means for matching the number indicated by the identification code against the stored numbers,

* dialling means for making a ringing signal go out, in the case of a match, to the terminal to be connected with the computer(2-12),

* and connecting means for establishing a telecommunication connection between the latter terminal and the computer in response to an answer signal received from this terminal(2-48),
  characterized in that:

* the security unit is comprised in the exchange and that the exchange is further provided with means for preventing the establishment, without the security unit being involved, of a connection between a terminal and a telecommunication line connected to the exchange and giving access to the computer, whereby:

* during the request phase the preventing means reserves the line circuit of a subscriber line connected to the computer ( 1-26) and this line circuit is maintained in the reserved state when disconnecting the call and releasing all other resources at the end of the request phase(1-34), and

* during the call-back phase the preventing means attempts to set up a connection between the authorised terminal and the already engaged line circuit (2-6, 2-24) followed by the preventing means checking whether the authorized terminal answers the call (2-14, 2-30).

**Patentansprüche**

1. Verfahren zum Verschaffen einer Telekommunikationsverbindung mit einem Computer, welche Verbindung eine Telekommunikationsvermittlungsstelle umfaßt, mit dieser Vermittlungsstelle zu verbindende Endstationen und eine Sicherheitseinheit zur Absicherung des Zugangs der Endstationen zu dem mit dem System verbundenen Computer, wobei das Verfahren die folgenden Schritte enthält:
   * Empfang eines Identifkationscodes von einer anfordernden Endstation, der die Nummer einer mit dem Computer zu verbindenden Endstation angibt (1-12),

* Speichern der Nummern der Endstationen, die zum Aufbauen einer Verbindung mit dem Computer berechtigt sind (1-20),
* Vergleich der von dem Identifikationscode angegebenen Nummer mit den gespeicherten Nummern,
* Sorgen, daß im Falle einer Übereinstimmung ein Rufsignal an die mit dem Computer zu verbindende Endstation ausgeht (2-12),
* Aufbau einer Telekommunikationsverbindung zwischen der letzteren Endstation und dem Computer als Reaktion auf ein von dieser Endstation empfangenes Antwortsignal (2-48), dadurch gekennzeichnet, daß :
* die Sicherheitseinheit in der Vermittlungsstelle enthalten ist und außerdem in der Vermittlungsstelle vorgesehene Mittel den Aufbau einer Verbindung zwischen einer Endstation und einer mit der Vermittlungsstelle verbundenen und Zugang zu dem Computer gebenden Telekommunikationsleitung ohne Beteiligung der Sicherheitseinheit verhindern, wobei das Verhinderungsverfahren die folgenden Schritte enthält:
* während der Anforderungsphase reserviert das verhindernde Mittel die Teilnehmerschaltung einer mit dem Computer verbundenen Teilnehmerleitung (1-26), und diese Teilnehmerschaltung wird in dem reservierten Zustand gehalten, wenn der Anruf getrennt und alle anderen Betriebsmittel am Ende der Anforderungsphase freigegeben werden (1-34) und
* während der Rückrufphase versucht das verhindernde Mittel eine Verbindung zwischen der berechtigten Endstation und der schon belegten Teilnehmerschaltung aufzubauen (2-6, 2-24), gefolgt von einer Überprüfung durch das verhindernde Mittel, ob die berechtigte Endstation den Ruf beantwortet (2-14, 2-30).

2. Verfahren nach Anspruch 1, in dem in der Vermittlungsstelle ein für eine ursprüngliche, mit der Vermittlungsstelle verbundene Bestimmungsendstation bestimmter Ruf zu einer mit der Vermittlungsstelle verbundenen Umleitungsendstation umgeleitet wird, dadurch gekennzeichnet, daß in der Vermittlungsstelle, ungeachtet der angefragten Umleitung, die Verbindung zwischen dem Computer und der ursprünglichen Bestimmungsendstation, unter Überwachung durch die Sicherheitseinheit, durchgeschaltet wird.

3. Verfahren nach Anspruch 1 oder 2, dadurch gekennzeichnet, daß der Identifikationscode einen Teil der Telefonnummer bildet, die von dem Benutzer der anfordernden Endstation zur Anforderung der Verbindung mit dem Computer zu wählen ist.

4. System zum Verschaffen einer Telekommunikationsverbindung mit einem Computer, welche Verbindung eine Telekommunikationsvermittlungsstelle umfaßt, mit dieser Vermittlungsstelle zu verbindende Endstationen und eine Sicherheitseinheit zur Absicherung des Zugangs der Endstationen zu dem mit dem System verbundenen Computer, wobei die Sicherheitseinheit die folgenden Elemente enthält:
* Empfangsspeicher zum Empfang eines Identifkationscodes von einer anfordernden Endstation, der die Nummer einer mit dem Computer zu verbindenden Endstation angibt (1-12),
* Autorisationsspeicher zum Speichern der Nummern der Endstationen, die für den Aufbau einer Verbindung mit dem Computer berechtigt sind (1-20),
* Komparatormittel zum Vergleich der von dem Identifikationscode angegebenen Nummer mit den gespeicherten Nummern,
* Wählmittel, um dafür zu sorgen, daß im Falle einer Übereinstimmung ein Rufsignal an die mit dem Computer zu verbindende Endstation ausgeht (2-12), und
* Verbindungsmittel zum Aufbau einer Telekommunikationsverbindung zwischen der letzteren Endstation und dem Computer als Reaktion auf ein von dieser Endstation empfangenes Antwortsignal (2-48), dadurch gekennzeichnet, daß:
* die Sicherheitseinheit in der Vermittlungsstelle enthalten ist und außerdem in der Vermittlungsstelle vorgesehene Mittel den Aufbau einer Verbindung zwischen einer Endstation und einer mit der Vermittlungsstelle verbundenen und Zugang zu dem Computer gebenden Telekommunikationsleitung ohne Beteiligung der Sicherheitseinheit verhindern, wobei:
* das verhindernde Mittel während der Anforderungsphase die Teilnehmerschaltung einer mit dem Computer verbundenen Teilnehmerleitung (1-26) reserviert und diese Teilnehmerschaltung in dem reservierten Zustand gehalten wird, wenn der Anruf getrennt und alle anderen Betriebsmittel am Ende der Anforderungsphase freigegeben werden (1-34) und
*   das verhindernde Mittel während der Rückrufphase versucht, eine Verbindung zwischen der berechtigten Endstation und der schon besetzten Teilnehmerschaltung aufzubauen (2-6, 2-24), gefolgt von einer Überprüfung durch das verhindernde Mittel, ob die berechtigte Endstation den Ruf beantwortet (2-14, 2-30).

**Revendications**

1.  Procédé pour établir une connexion de télécommunication avec un ordinateur, la connexion comprenant un central de télécommunication, des terminaux à connecter à ce central et une unité de sécurité pour protéger l'accès des terminaux à l'ordinateur connecté au système, le procédé comprenant :
    -   la réception, en provenance d'un terminal demandeur, d'un code d'identification indiquant le numéro d'un terminal à connecter à l'ordinateur (1-12),
    -   le stockage des numéros des terminaux autorisés à établir une connexion avec l'ordinateur (1-20),
    -   la comparaison du numéro indiqué par le code d'identification avec les numéros stockés,
    -   l'émission d'un signal d'appel, dans le cas d'une concordance, vers le terminal à connecter à l'ordinateur (2-12),
    -   l'établissement d'une liaison de télécommunication entre ce dernier terminal et l'ordinateur en réaction à un signal de réponse reçu de ce terminal (2-48),
        caractérisé en ce que :
    -   l'unité de sécurité est incorporée dans le central et que d'autres moyens prévus dans le central empêchent l'établissement, sans l'intervention de l'unité de sécurité, d'une connexion entre un terminal et une ligne de télécommunication connectée au central et donnant accès à l'ordinateur, le procédé d'empêchement comprenant :
    -   pendant la phase de demande, les moyens d'empêchement réservent le circuit de ligne d'une ligne d'abonné connectée à l'ordinateur (1-26) et ce circuit de ligne est maintenu à l'état réservé lors de la coupure de l'appel et de la libération de toutes les autres ressources à la fin de la phase de demande (1-34), et
    -   pendant la phase de rappel, les moyens d'empêchement tentent d'établir une connexion entre le terminal autorisé et le circuit de ligne déjà engagé (2-6, 2-24) puis les moyens d'empêchement vérifient si le terminal autorisé répond à l'appel (2-14, 2-30).

2.  Procédé suivant la revendication 1, dans lequel, dans le central, un appel destiné à un terminal de destination initiale connecté au central est réacheminé vers un terminal de transfert connecté au central, caractérisé en ce que, dans le central, la connexion entre l'ordinateur et le terminal de destination initiale est commutée sous la commande de l'unité de sécurité, indépendamment du réacheminement demandé.

3.  Procédé suivant la revendication 1 ou 2, caractérisé en ce que le code d'identification fait partie du numéro de téléphone à composer par l'utilisateur du terminal demandeur pour demander la connexion à l'ordinateur.

4.  Système pour établir une connexion de télécommunication avec un ordinateur, la connexion comprenant un central de télécommunication, des terminaux à connecter à ce central et une unité de sécurité pour protéger l'accès des terminaux à l'ordinateur connecté au système, l'unité de sécurité comprenant :
    -   une mémoire de réception pour recevoir d'un terminal demandeur un code d'identification indiquant le numéro d'un terminal à connecter à l'ordinateur (1-12),
    -   une mémoire d'autorisation pour stocker les numéros des terminaux autorisés à établir une connexion avec l'ordinateur (1-20),
    -   un dispositif comparateur pour comparer le numéro indiqué par le code d'identification avec les numéros stockés,
    -   un dispositif de numérotation pour provoquer l'émission d'un signal d'appel, dans le cas d'une concordance, vers le terminal à connecter à l'ordinateur (2-12),
    -   et des moyens de connexion pour établir une connexion de télécommunication entre ce dernier terminal et l'ordinateur en réponse à un signal de réponse reçu de ce terminal (2-48),
        caractérisé en ce que :

- l'unité de sécurité fait partie du central et le central est, en outre, pourvu de moyens pour empêcher l'établissement, sans l'intervention de l'unité de sécurité, d'une connexion entre un terminal et une ligne de télécommunication connectée au central et donnant accès à l'ordinateur, de sorte que :
- pendant la phase de demande, les moyens d'empêchement réservent le circuit de ligne d'une ligne d'abonné connectée à l'ordinateur (1-26) et ce circuit de ligne est maintenu à l'état réservé lors de la coupure de l'appel et de la libération de toutes les autres ressources à la fin de la phase de demande (1-34), et
- pendant la phase de rappel, les moyens d'empêchement tentent d'établir une connexion entre le terminal autorisé et le circuit de ligne déjà engagé (2-6, 2-24) puis les moyens d'empêchement vérifient si le terminal autorisé répond à l'appel (2-14, 2-30).

FIG.1

FIG.2